(19) Europäisches Patentamt
European Patent Office
Office européen des brevets

(11) **EP 4 425 666 A1**

(12) **EUROPEAN PATENT APPLICATION**
published in accordance with Art. 153(4) EPC

(43) Date of publication:
**04.09.2024   Bulletin 2024/36**

(21) Application number: **22900857.8**

(22) Date of filing: **16.08.2022**

(51) International Patent Classification (IPC):
*H01M 50/249* (2021.01)      *B60K 1/04* (2019.01)
*H01M 50/242* (2021.01)      *H01M 50/291* (2021.01)
*H01M 50/293* (2021.01)

(52) Cooperative Patent Classification (CPC):
**B60K 1/04; H01M 50/207; H01M 50/242;
H01M 50/249; H01M 50/291; H01M 50/293;
Y02E 60/10**

(86) International application number:
**PCT/JP2022/030954**

(87) International publication number:
**WO 2023/100422 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **02.12.2021   JP 2021195847**

(71) Applicant: **JFE Steel Corporation
Tokyo 100-0011 (JP)**

(72) Inventors:
• **HIGAI, Kazuhiko
Tokyo 100-0011 (JP)**
• **SHIOZAKI, Tsuyoshi
Tokyo 100-0011 (JP)**

(74) Representative: **Hoffmann Eitle
Patent- und Rechtsanwälte PartmbB
Arabellastraße 30
81925 München (DE)**

(54) **BATTERY CASE AND BATTERY-CASE CROSS MEMBER**

(57)      A battery case 1 according to the present invention is mounted under a floor of a vehicle body to store a battery, and includes a main body 3 including a bottomed frame body having side walls 9 facing each other in a vehicle width direction in a state of being mounted in the vehicle body; and a battery case cross member 5 that is provided in such a manner as to extend between the facing side walls 9 in the main body 3 and that reinforces the main body 3, in which the battery case cross member 5 includes a hat-shaped section part 13 including a top portion 13a, side wall portions 13b, and flange portions 13c, the flange portions 13c abutting on a bottom surface of the main body 3, a resin 15 patched on or coating a full length of an inner surface and/or outer surface of the hat-shaped section part 13, and a reinforcement 17 arranged in such a manner as to cover the resin 15 and adhered to the resin 15.

FIG.1

EP 4 425 666 A1

**Description**

Field

The present invention relates to a battery case of an automobile and a battery case cross member used for the battery case.

Background

A battery case cross member is provided as a stiffing member in a battery case installed under a floor of an automobile. The battery case cross member is set inside the battery case in such a manner that an axial direction is a vehicle width direction, and has a function of controlling a deformation of the battery case due to an input load from a side sill at the time of side crash of the automobile and preventing breakage of a battery inside the battery case.

In order to effectively exhibit such a function, the battery case cross member is a component requiring a high level of strength. In addition, at the present time at which weight reduction of an automatic body of the automobile is required, a technique of forming a battery case with light metal such as an aluminum alloy has been studied.

As a related art of a structure of the battery case, for example, there are structures described in Patent Literature 1 and Patent Literature 2. Patent Literature 1 describes a structure in which a reinforcing member that reinforces a battery case container main body (described as a tray in Patent Literature 1) in a vehicle width direction sandwiches the tray from an upper surface and a lower surface, or the reinforcing member is arranged on any one of the upper surface or the lower surface of the tray.

Furthermore, Patent Literature 2 describes a structure in which a battery case container main body is formed of a deep drawn product made of a 5000-series aluminum alloy. In this structure, the battery case includes at least one internal reinforcing member in a vehicle front-rear direction and right-left direction inside the container main body, and the internal reinforcing member is made of a 7000-series aluminum alloy.

Citation List

Patent Literature

> Patent Literature 1: Japanese Patent Application Laid-open No. 2019-81436
> Patent Literature 2: Japanese Patent Application Laid-open No. 2021-68523

Summary

Technical Problem

In the structure described in Patent Literature 1, there remains a problem of further reducing weight of an automotive body in order to increase a cruising distance of a battery electric vehicle. On the other hand, the structure described in Patent Literature 2 has a characteristic that the 7000-series aluminum alloy having high strength among aluminum alloys is used for the reinforcing member. However, the 7000-series aluminum alloy has only about 300 MPa to 400 MPa of 0.2% yield strength. Thus, it is necessary to increase a thickness of a member of the battery case cross member in order to control deformation of the battery case, and there are problems of an increase in weight and an increase in cost.

As described above, although there are techniques of preventing the deformation of the battery case due to the input load from the side sill at the time of the side crash of the automobile, these techniques have problems of the increase in weight and the increase in cost.

The present invention has been made to solve the above problems, and an object thereof is to provide a battery case and a battery case cross member capable of realizing stiffness, weight reduction, and vibration-damping properties better than those in a related art without reducing a battery case volume.

Solution to Problem

A battery case according to a first aspect of the present invention is mounted under a floor of a vehicle body to store a battery and includes: a main body formed of a bottomed frame body having side walls facing each other in a vehicle width direction in a state of being mounted on the vehicle body; and a battery case cross member configured to extend between the facing side walls in the main body and to reinforce the main body, the battery case cross member including a hat-shaped section part including a top portion, side wall portions, and flange portions, the flange portions abutting on a bottom surface of the main body, a resin patched on or coating a full length of an inner surface and/or outer surface of the hat-shaped section part, and a reinforcement arranged to cover the resin and adhered to the resin.

A battery case according to a second aspect of the present invention is mounted under a floor of a vehicle body to store a battery and includes: a main body formed of a bottomed frame body having side walls facing each other in a vehicle width direction in a state of being mounted on the vehicle body; and a battery case cross member configured to extend between the facing side walls in the main body and reinforce the main body, the battery case cross member including a tunnel-shaped part having a tunnel shape as a whole and including a flange portion at a lower end portion of each of side walls, a resin patched on or coating a full length of an inner surface and/or outer surface of the tunnel-shaped part, and a reinforcement arranged to cover the resin and adhered to the resin.

A thickness of the resin may be 0.1 to 5 mm, and a thickness of the reinforcement may be 0.15 to 1 mm.

An end portion of the reinforcement may be joined to each of the side wall portions of the hat-shaped section part or the peripheral wall of the tunnel-shaped part.

Joining protrusions may be formed at the end portion of the reinforcement at predetermined intervals in a longitudinal direction, and the joining protrusions may be joined to each of the side wall portions of the hat-shaped section part or the peripheral wall of the tunnel-shaped part.

An end portion of the reinforcement may be joined to the bottom surface of the main body.

A battery case cross member according to the first aspect of the present invention is provided in a main body of a battery case to extend between facing side walls of the main body and reinforcing the main body, the main body being formed of a bottomed frame body having the facing side walls, and the battery case being configured to store a battery in the main body, and includes: a hat-shaped section part including a top portion, side wall portions, and flange portions, the flange portions abutting on a bottom surface of the main body in a state of being installed in the battery case; a resin patched on or coating a full length of an inner surface and/or outer surface of the hat-shaped section part; and a reinforcement arranged to cover the resin and adhered to the resin.

A battery case cross member according to the second aspect of the present invention is provided in a main body of a battery case to extend between facing side walls of the main body and reinforcing the main body, the main body being formed of a bottomed frame body having the facing side walls, and the battery case being configured to store a battery in the main body, and includes: a tunnel-shaped part including an opening in a part of a peripheral wall, and a flange portion in the opening; a resin patched on or coating a full length of an inner surface and/or outer surface of the tunnel-shaped part; and a reinforcement arranged to cover the resin and adhered to the resin.

A thickness of the resin may be 0.1 to 5 mm, and a thickness of the reinforcement may be 0.15 to 1 mm.

An end portion of the reinforcement may be joined to each of the side wall portions of the hat-shaped section part or the peripheral wall of the tunnel-shaped part.

Joining protrusions may be formed at the end portion of the reinforcement at predetermined intervals in a longitudinal direction, and the joining protrusions may be joined to each of the side wall portions of the hat-shaped section part or the peripheral wall of the tunnel-shaped part.

An end portion of the reinforcement may be joined to the bottom surface of the main body.

Advantageous Effects of Invention

According to a battery case of the present invention, deformation of the battery case at the time of a side crash can be controlled by an improvement in stiffness of a battery case cross member, and weight reduction and vibration-damping properties of the battery case can also be improved. In addition, since an appearance of the battery cross member hardly changes, the volume does not decrease as compared with a battery case of related art.

Brief Description of Drawings

FIG. 1 is a view for describing a battery case according to an embodiment of the present invention, FIG. 1(a) being a perspective view, and FIG. 1(b) being a cross-sectional view taken along a line A-A of FIG. 1(a).
FIG. 2 is a view illustrating a cross section of a battery case cross member of a related art as a comparative example of the battery case cross member of FIG. 1.
FIG. 3 is a view for describing a model of evaluating plane stiffness of a side wall portion of the battery case cross member in FIG. 1 (invention model), and a model of evaluating plane stiffness of a side wall portion of the battery case cross member in the related art in FIG. 2 (conventional model).
FIG. 4 is a graph illustrating results of evaluating plane stiffness of the conventional model and the invention model in FIG. 3.

FIG. 5 is a view of describing a deformed state of the battery case cross member at the time of a side crash.

FIG. 6 is a view illustrating another aspect of a cross section of the battery case cross member of FIG. 1.

FIG. 7 is a view for describing another aspect of a joining method of a reinforcement in the battery case cross member.

FIG. 8 is a view for describing a resin coating (patching) range and a specific dimension in a circumferential direction of a test body of an invention example according to an example.

FIG. 9 is a view illustrating load-stroke curves during a crash test in a fourth invention example and a first comparative example according to the example.

Description of Embodiments

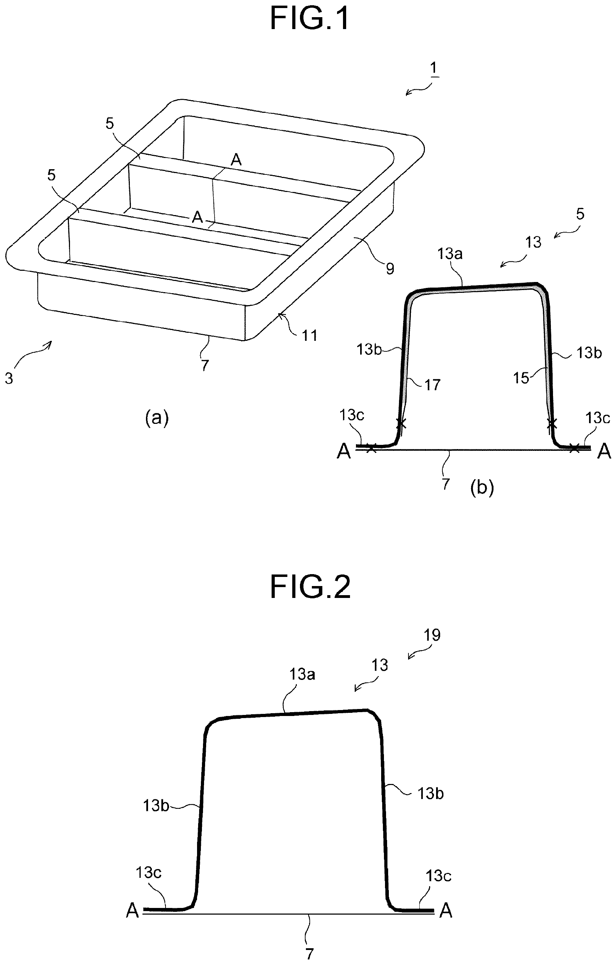

A battery case 1 of an automobile according to an embodiment of the present invention will be described with reference to FIG. 1. The battery case 1 according to the present embodiment is mounted under a floor of a vehicle body, stores a battery, and includes a main body 3, and a battery case cross member 5 that is provided in such a manner as to extend between facing side walls 9 in the main body 3 and that reinforces the main body 3. Each configuration will be described below.

<Main body>

The main body 3 stores a battery of a battery electric vehicle. The main body 3 includes a battery case lower 11 formed of a bottomed frame body including a rectangular bottom portion 7 and side walls 9 erected on a peripheral edge of the bottom portion 7, and a battery case upper (not illustrated) that is a lid covering the battery case lower 11.

<Battery case cross member>

The battery case cross member 5 is a stiffing member that improves stiffness of the battery case 1, and controls deformation of the battery case 1 at the time of a side crash.

As illustrated in FIG. 1(b), the battery case cross member 5 includes a hat-shaped section part 13, a resin 15 patched on or coating an inner surface of the hat-shaped section part 13, and a reinforcement 17 provided in such a manner as to cover the resin 15.

The hat-shaped section part 13 is a member made of metal (such as a steel sheet) having a hat-shaped cross section and includes a top portion 13a, side wall portions 13b, and flange portions 13c. The flange portions 13c of the hat-shaped section part 13 are joined to the bottom portion 7 of the battery case lower 11. In addition, both end portions of the side wall portions 13b are respectively joined to the facing side walls 9. As a material of the hat-shaped section part 13, for example, a high strength steel sheet of 980 MPa or more is used in order to enhance strength and stiffness.

The resin 15 of predetermined adhesive strength is patched on or coating an inner surface of each of the side wall portions 13b of the hat-shaped section part 13. The resin 15 may be molded in advance (as an injection-molded resin component) and patched on the hat-shaped section part 13, or may be formed by coating of the resin 15 before molding to the hat-shaped section part 13 and by baking.

A lower limit of a thickness of the resin 15 is about 0.1 mm that can uniformly coat in a case of forming the resin 15 by coating, and is about 20 $\mu$m in a case where the film-shaped resin 15 is patched. An upper limit of the thickness of the resin 15 is preferably about 5 mm from a viewpoint of cost.

Furthermore, the reinforcement 17 is provided in such a manner as to cover the resin 15. The reinforcement 17 prevents the resin 15 from being debonded from the side wall portion 13b of the hat-shaped section part 13, and improves the plane stiffness of the side wall portion 13b in cooperation with the resin 15 as described later, whereby the stiffness of the battery case cross member 5 is improved. The reinforcement 17 is fixed to the side wall portion 13b of the hat-shaped section part 13 by spot welding. In addition, the reinforcement 17 and the resin 15 are adhered to each other with predetermined strength.

The effect of improving the plane stiffness of the side wall portion 13b in the present embodiment does not largely depend on tensile strength of the material of the reinforcement 17 as described later. Thus, the tensile strength may be lower than that of the material of the hat-shaped section part 13, and 270 MPa-class to 590 MPa-class tensile strength may be employed from a viewpoint of reducing a manufacturing cost. Furthermore, the reinforcement 17 only needs to prevent debonding of the resin 15 from the side wall portion 13b of the hat-shaped section part 13. Thus, a sheet thickness of the reinforcement 17 may be thinner than a sheet thickness of the material of the hat-shaped section part 13, and a steel sheet having a sheet thickness of 0.15 to 1 mm is preferable from a viewpoint of weight reduction and manufacturing cost reduction.

The tensile strength is set to the 270 MPa-class to the 590 MPa-class since the tensile strength is the lowest in a usually-used steel sheet at the 270 MPa-class, and cost is greatly increased when the 590 MPa-class is exceeded.

Within this range, specifically, the 270 MPa-class (so-called mild steel) that is a grade of an inexpensive general cold rolled steel sheet called common steel such as SPCC of the Japan Industrial Standard (JIS) is preferable from a viewpoint of cost. In addition, the sheet thickness is set to 0.15 to 1 mm since the manufacturing cost increases when the sheet thickness is less than 0.15 mm, and a weight reduction effect decreases when the sheet thickness exceeds 1 mm.

As illustrated in FIG. 2, a general battery case cross member 19 in a related art only includes a metal hat-shaped section part 13. However, in this case, in order to improve strength and stiffness, it is necessary to increase a sheet thickness of the hat-shaped section part 13, and weight is increased.

In this point, in the battery case cross member 5 of the present embodiment in which the resin 15 and the reinforcement 17 are provided on the hat-shaped section part 13, an apparent sheet thickness of the portion where the resin 15 and the reinforcing 17 are provided is thick. However, since the resin 15 having density lower than that of metal is used, the weight is less likely to increase as compared with a case where the sheet thickness of the hat-shaped section part 13 itself is increased as in the related art.

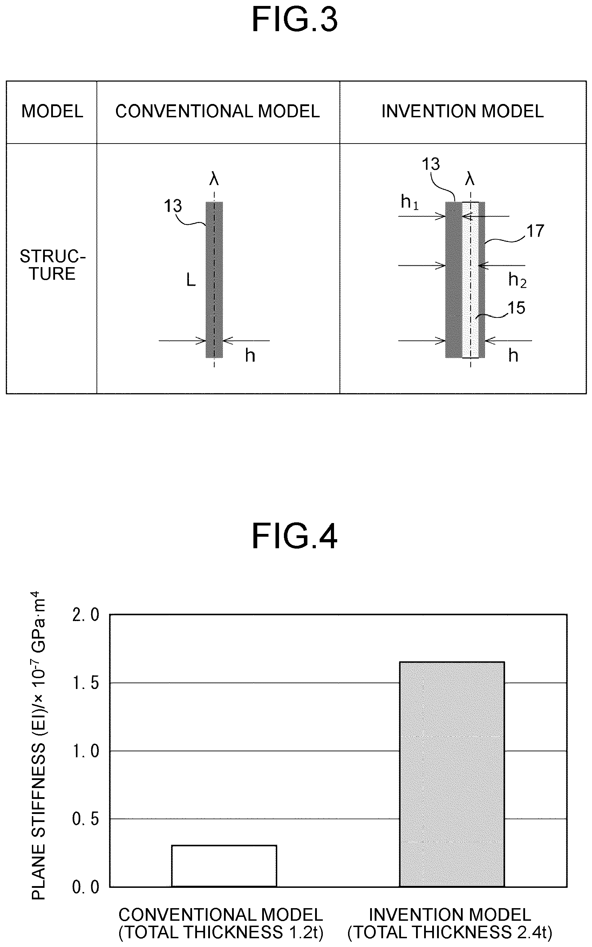

Furthermore, since a sandwich structure in which the resin 15 is sandwiched between the metal hat-shaped section part 13 and the reinforcement 17 is employed, the plane stiffness of the side wall portion 13b can be improved. The plane stiffness of the side wall portion 13b is stiffness before a load is input in an in-plane direction of the side wall portion 13b from the end portion of the side wall portion 13b and buckling deformation is started (bending stiffness). This point will be described with reference to FIG. 3 and FIG. 4.

In FIG. 3, a conventional model including only a steel sheet (hat-shaped section part 13) is illustrated as a model for evaluating plane stiffness of a side wall portion 13b of the battery case cross member 19 in the related art (see FIG. 2). In addition, an invention model having a sandwich structure (three-layer laminate structure) is illustrated in FIG. 3 as a model for evaluating the plane stiffness of the side wall portion 13b of the battery case cross member 5 of the present embodiment (see FIG. 1(b)). In FIG. 3, parts corresponding to those in FIG. 1 and FIG. 2 are denoted by the same reference signs.

The plane stiffness of a case where only a steel sheet is included as in the conventional model is generally given by a product EI of Young's modulus E of a material and a geometrical moment of inertia I. On the other hand, the plane stiffness EI of a case of the sandwich structure as in the invention model can be obtained by utilization of the following expression (1).

$$EI = \frac{L}{3}\sum_{i=1}^{n} E_i \{(h_i - \lambda)^3 - (h_{i-1} - \lambda)^3\} \quad \cdot\cdot\cdot (1)$$

In the above expression (1), L is a width of a laminated body, i is a material, n is the number of layers, $E_i$ is a Young's modulus of the material i, $h_i$ is a thickness from a material of i = 1 to a layer of the material i, and $\lambda$ is a distance from a surface of the material of i = 1 to a neutral plane of the laminated body.

A difference in the plane stiffness EI of a case where the conventional model and the invention model in FIG. 3 have substantially the same weight was compared, and a result thereof is illustrated in FIG. 4. In FIG. 4, a thickness of the hat-shaped section part 13 of the conventional model is set to 1.2t (total thickness 1.2t), a thickness of the hat-shaped section part 13 of the present invention model is set to 0.6t, a thickness of the resin 15 is set to 1.5t, and a thickness of the reinforcement 17 is set to 0.3t (total thickness 2.4t), and the plane stiffness EI of each is calculated by utilization of the expression (1). In a weight ratio of the both models in FIG. 4, the invention model was 0.97 when the weight of the conventional model was a reference (1.00).

As illustrated in FIG. 4, the plane stiffness of the invention model ($1.65 \times 10^{-7}$ GPa·m⁴) was improved to 5.3 times that of the conventional model ($0.31 \times 10^{-7}$ GPa·m⁴). As described above, the hat-shaped section part 13 (made of metal) of the invention model is made thinner than that of the conventional model and replaced with the resin 15 having the lower density and the lower Young's modulus than metal, and the total thickness of the sandwich structure with the reinforcement 17 is made thicker than the sheet thickness of the conventional model. As a result, the invention model can significantly increase the plane stiffness even with the same degree of weight as the conventional model.

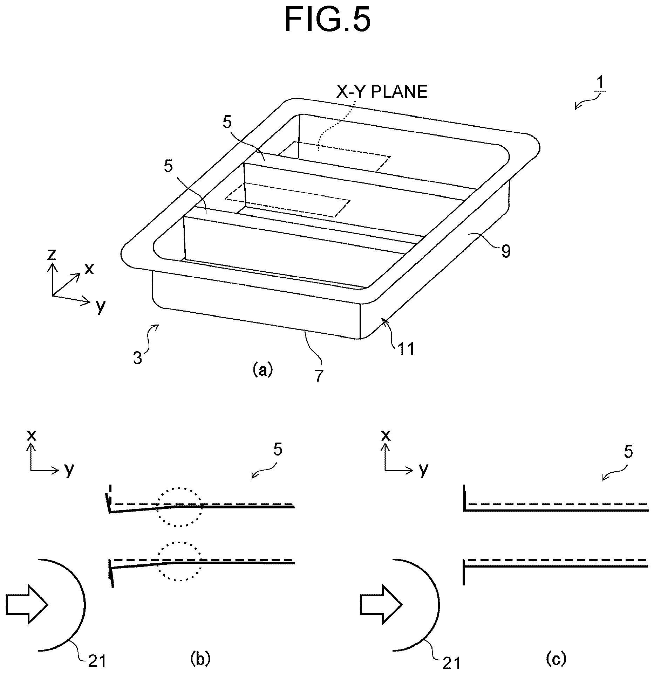

Next, a reason why the resin 15 and the reinforcement 17 are provided on the side wall portion 13b of the hat-shaped section part 13 will be described with reference to FIG. 5. FIG. 5 is a view for describing a deformed state of the battery case cross member 5 of a case where a side surface of the vehicle body crashes into a pole 21. FIG. 5(a) is a perspective view of the battery case 1, and FIG. 5(b) and FIG. 5(c) are plan views of cut sections taken along xy planes indicated by broken lines in FIG. 5(a). Furthermore, broken lines in FIG. 5(b) and FIG. 5(c) represent an original shape of the battery case cross member 5. Although other components such as a side sill is present outside the vehicle body of the battery case 1 in an actual vehicle body, these components are not illustrated in FIG. 5.

When the pole 21 is located at a position illustrated in FIG. 5(b) and a left side surface of the vehicle body in the drawing crashes into the pole 21, deformation of the battery case cross members 5 on both sides of the portion crashing into the pole 21 is often a bending mode (solid line in FIG. 5(b)) of being bent toward the crash portion.

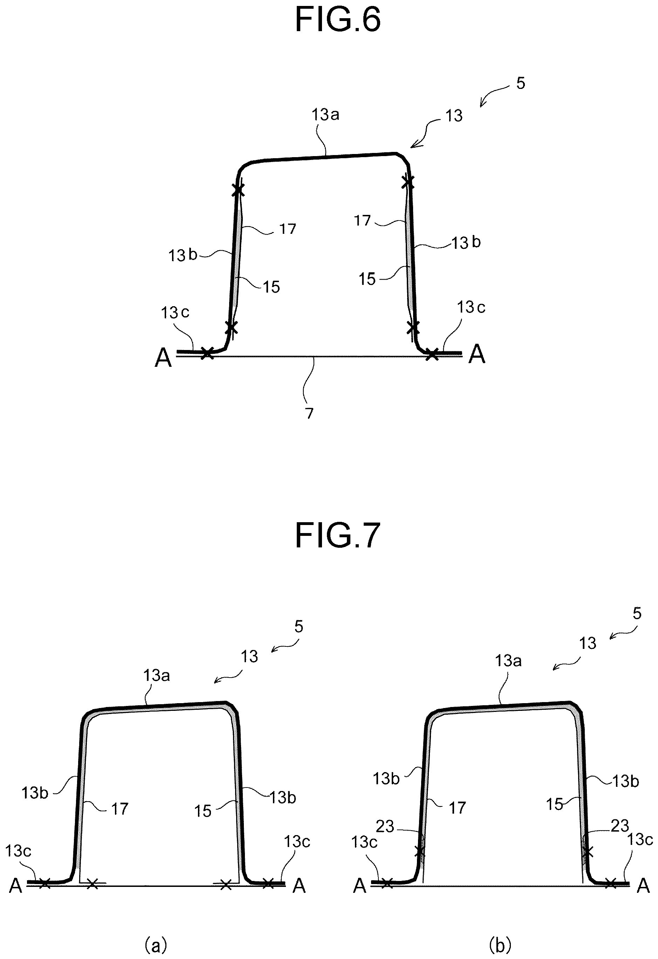

At the time of deformation in the bending mode as illustrated in FIG. 5(b), while the top portion 13a undergoes in-plane deformation, the side wall portion 13b undergoes out-of-plane deformation. Thus, the side wall portion 13b is more easily deformed than the top portion 13a. Thus, improving the plane stiffness of the side wall portion 13b by providing the resin 15 and the reinforcement 17 on the side wall portion 13b improves the yield strength against the bending mode of the battery case cross member 5 and is effective. By improvement of the plane stiffness of the side wall portion 13b, as illustrated in FIG. 5(c), the battery case cross member 5 is maintained in the original shape thereof even at the time of the side crash. In addition, as illustrated in FIG. 6, providing the resin 15 and the reinforcement 17 only on the side wall portion 13b of the hat-shaped section part 11 is effective for deformation in the bending mode, and weight reduction can be expected.

Since the hat-shaped section part 13, the resin 15, and the reinforcement 17 integrally receive the load and the plane stiffness is effectively improved, the hat-shaped section part 13 and the resin 15, and the resin 15 and the reinforcement 17 need to be adhered with predetermined strength. This point will be described with a specific example.

For example, in a case where the sheet thickness of the hat-shaped section part 13 is 1.0 mm, the thickness of the resin 15 is 1.0 mm, and the sheet thickness of the reinforcement 17 (made of iron) is 0.6 mm, when the hat-shaped section part 13 and the resin 15, and the resin 15 and the reinforcement 17 are adhered to each other, the plane stiffness EI is $2.72 \times 10^{-7}$ GPa·m$^4$. Here, the Young's modulus of iron was 206 GPa, and the Young's modulus of the resin 15 was 2 GPa. In a case where the resin 15 and the reinforcement 17 are not adhered to each other, the plane stiffness EI of the adhered hat-shaped section part 13 and resin 15 is $0.19 \times 10^{-7}$ GPa·m$^4$, and the plane stiffness EI of the reinforcement 17 alone is $0.04 \times 10^{-7}$ GPa·m$^4$. Thus, the total is $0.23 \times 10^{-7}$ GPa·m$^4$, and the plane stiffness as a whole is significantly decreased. Thus, it is important that the hat-shaped section part 13 and the resin 15 are adhered with sufficient strength and the resin 15 and the reinforcement 17 are adhered with sufficient strength in such a manner that the hat-shaped section part 13, the resin 15, and the reinforcement 17 can integrally receive the load.

The adhesive strength is preferably 5 MPa or more, for example. When the adhesive strength is 5 MPa or more, an adhesive is not debonded from the steel sheet in a case of bending deformation up to about 90° in the deformation in the bending mode in which the battery case cross member 5 is bent and folded in one side wall direction. The end portion of the battery case cross member 5 may be axially crushed and buckling-deformed into a bellows shape at an initial stage of the crash, and a deformation amount is larger than that of the bending deformation. When the resin 15 is debonded at the initial stage of the deformation, yield strength at the time of the next (bellows) deformation decreases. Thus, it is more preferable to set the adhesive strength to 10 MPa or more at a portion where large deformation such as axial crushing is assumed.

With respect to a patching (or coating) range of the resin 15 in a longitudinal direction of the battery case cross member 5, it is preferable to provide the resin 15 over a full length in the longitudinal direction.

<Method of determining resin thickness>

As described above, the thickness of the resin 15 of the battery case cross member 5 is not limited in the present invention. However, the effect of improving the plane stiffness of the side wall portion 13b may be decreased when the resin 15 is too thin, and the effect of weight reduction may be decreased when the resin 15 is too thick. Thus, it is preferable to determine the resin thickness in consideration of a balance between the two. Hereinafter, an example of a method of determining such a resin thickness will be described.

First, the hat-shaped section part 13 to be a base for examination is prepared, and the weight and the plane stiffness of the side wall portion 13b are obtained. Here, the hat-shaped section part 13 made of a steel sheet having the sheet thickness of 1.6 mm was prepared, and the weight (including the weight of the bottom portion 7) and the plane stiffness of the side wall portion 13b were obtained (see <<base>> in Table 1 in the following).

Next, as the hat-shaped section part 13 included in the battery case cross member 5 according to the present embodiment, one having a sheet thickness thinner than the sheet thickness of the hat-shaped section part 13 serving as the base is prepared. Here, three types of hat-shaped section parts 13 having the sheet thicknesses of 0.8 mm <<No. 1>>, 1.0 mm <<No. 2>>, and 1.2 mm <<No. 3>> were prepared. The reinforcement 17 was made of a steel sheet having a sheet thickness of 0.4 mm (common to <<No. 1>> to <<No. 3>>).

In a case where the battery case cross member 5 in a manner illustrated in FIG. 1 is configured by utilization of the hat-shaped section parts 13 of <<No. 1>> to <<No. 3>> and the reinforcement 17, the resin thickness of when the plane stiffness of the side wall portion 13b is adjusted to be the same degree as the plane stiffness of <<base>> was obtained (A). In addition, the resin thickness of when the weight of the battery case cross member 5 was adjusted to be the same degree as the weight of <<base>> was obtained (B). Results are illustrated in Table 1. Weight in Table 1 also includes the weight of the bottom portion 7 (0.9 kg in common). In addition, the plane stiffness is assumed to be that in the side wall portion 13b.

Table 1

| No | Resin thickness determination A. Constant plane stiffness B. Constant weight | Sheet thickness of hat-shaped section part hc/mm | Resin thickness hj/mm | Sheet thickness of reinforcement hp/mm | Total thickness hc+hj+hp/mm | Weight *including bottom portion /kg | Weight reduction rate /% m | Plane stiffness of side wall portion ×10⁻⁷ GPa·m⁴ | Plane stiffness improvement rate /% |
|---|---|---|---|---|---|---|---|---|---|
| Base | - | 1.60 | - | - | 1.60 | 3.59 | - | 0.70 | - |
| 1 | A | 0.80 | 0.45 | 0.40 | 1.65 | 2.85 | 21 | 0.71 | 1% |
| | B | 0.80 | 4.00 | 0.40 | 5.20 | 3.56 | 1 | 11.89 | 1599% |
| 2 | A | 1.00 | 0.25 | 0.40 | 1.65 | 3.15 | 12 | 0.71 | 1% |
| | B | 1.00 | 2.50 | 0.40 | 3.90 | 3.60 | 0 | 6.27 | 796% |
| 3 | A | 1.20 | 0.02 | 0.40 | 1.62 | 3.44 | 4 | 0.72 | 3% |
| | B | 1.20 | 0.80 | 0.40 | 2.40 | 3.60 | 0 | 1.90 | 171% |
| *Weight of bottom portion is 0.9 kg (in common) | | | | | | | | | |

EP 4 425 666 A1

In A of <<No. 1>> to <<No. 3>> illustrated in Table 1, the sheet thickness of the hat-shaped section part 13 is made thinner than that of <<base>>, and the resin 15 having the Young's modulus lower than that of the steel sheet is provided. In addition, in A of <<No. 1>> to <<No. 3>>, the total thickness of the sandwich structure with the reinforcement 17 was made thicker than the sheet thickness of <<base>>, the same degree of plane stiffness as the plane stiffness of <<base>> ($0.70 \times 10^{-7}$ GPa·m$^4$) was secured, and the effect of weight reduction by utilization of the resin 15 having the density lower than that of the steel sheet was maximized. The weight reduction rates are 21% for <<No. 1>>, 12% for <<No. 2>>, and 4% for <<No. 3>>.

On the other hand, in B of <<No. 1>> to <<No. 3>>, the resin thickness is increased until the weight becomes the same degree as the weight of <<base>> (3.59 kg), the total thickness of the sandwich structure is made thicker than that of A, and the effect of improving the plane stiffness is maximized. Plane stiffness improvement rates are 1599% for <<No. 1>>, 796% for <<No. 2>>, and 171% for <<No. 3>>.

On the basis of the results in Table 1, the resin thickness is determined with the resin thickness of a case of A in which the weight can be maximally reduced without reduction of the plane stiffness as compared with <<base>> being set as a lower limit, and the resin thickness of a case of B in which the plane stiffness can be maximally improved without an increase in the weight as compared with <<base>> being set an upper limit. Thus, in a case of <<No. 1>> (the sheet thickness hc of the hat-shaped section part 13 = 0.8 mm, and the sheet thickness hp of the reinforcement 17 = 0.4 mm), the resin thickness is set within a range of 0.45 mm to 4.0 mm. Similarly, the resin thickness is set within a range of 0.25 mm to 2.5 mm in a case of <<No. 2>> (the sheet thickness hc of the hat-shaped section part 13 = 1.0 mm, and the sheet thickness hp of the reinforcement 17 = 0.4 mm), and may be set within a range of 0.02 mm to 0.8 mm in a case of <<No. 3>> (the sheet thickness hc of the hat-shaped section part 13 = 1.2 mm, and the sheet thickness hp of the reinforcement 17 = 0.4 mm). In such a manner, the thickness of the resin 15 can be determined in consideration of the balance between the weight reduction and the improvement in plane stiffness (bending stiffness).

As described above, according to the present embodiment, the battery case cross member 5 includes the resin 15 patched on or coating the inner surface of the hat-shaped section part 13, and the reinforcement 17 arranged to cover the resin 15 and adhered. As a result, the stiffness of the battery case cross member 5 is improved, deformation of the battery case 1 at the time of the side crash is controlled as compared with the related art, and the weight of the battery case cross member 5 can be reduced. In addition, since an installation position of the battery case cross member 5 is not limited, a degree of freedom in battery case design is not reduced, and the volume of the battery case 1 is not reduced. The present embodiment can also improve vibration-damping properties. This point will be specifically described in examples described later.

Although an example in which the resin 15 and the reinforcement 17 are provided on the inner surface of the hat-shaped section part 13 of the battery case cross member 5 has been described in the above embodiment, the present invention is not limited thereto. A resin 15 and a reinforcement 17 may be provided on an outer surface of s hat-shaped section part 13. In addition, a resin 15 and a reinforcement 17 may be provided on each of an inner surface and an outer surface of a hat-shaped section part 13.

Furthermore, although the embodiment as the battery case 1 of the automobile has been described above, the present invention has a characteristic in a configuration of the battery case cross member 5 that is one component of the battery case 1. Thus, the present invention also includes an invention as a battery case cross member alone. Since an embodiment of the battery case cross member 5 is similar to the above description, the description thereof is omitted.

Although the battery case cross member 5 having the hat-shaped cross section has been described in the above embodiment, the battery case cross member 5 according to the present invention is not limited to one having the hat-shaped cross section. A tunnel-shaped part having a flange portion at a lower end portion of each of side walls and having a tunnel shape as a whole may be used. A dome-shaped member includes an aspect in which a portion formed of three planes of the side wall portions 13b and the top portion 13a in the hat-shaped cross section is not formed of three planes but formed of two planes or four planes or more (rectangular dome shape), and an aspect in which the portion is formed of a curved surface instead of a plane (general dome shape).

Examples

A specific experiment of evaluating an action and effect of the present invention has been conducted, and results will be described below. In the present example, a cylindrical test body (200 mm in length) including a component that has a hat-shaped cross section and that corresponds to the battery case cross member 5, and a flat plate corresponding to the bottom portion 7 of the battery case 1 was prepared, and a crash test of evaluating crash worthiness and an impact vibration test of evaluating vibration characteristics were performed.

In the crash test, a load was input in an axial direction (longitudinal direction) of the test body with an impact punch at a test speed of 8.9 m/s, and the test body was deformed for 20 mm from 200 mm to 180 mm in the axial direction. At that time, a load-stroke curve was obtained by measurement of the load generated in a support portion of the test body and a stroke of the impact punch (amount of axial crush deformation), and a maximum load (kN) of the load-stroke curve was defined as yield strength against the crash (referred to as crash yield strength) of the test body. The maximum value of the crash yield strength indicates a load at the time of a change to plastic deformation through elastic deformation immediately after a start of the axial crush deformation, and it can be said that the deformation at the time of the crash is less likely to be generated and the crash worthiness is better as this value becomes higher.

In the impact vibration test, an acceleration sensor was attached near an edge of the top portion 13a of the suspended test body, and impact vibration was applied to the side wall portions 13b of the test body with an impact hammer. Then, impact force obtained from the impact hammer and acceleration measured in the test body were taken into a fast Fourier transform (FFT) analyzer, and a frequency response function of acceleration ($m/s^2/N$) was calculated. The frequency response function was obtained by averaging processing of results of the five times of impact tests.

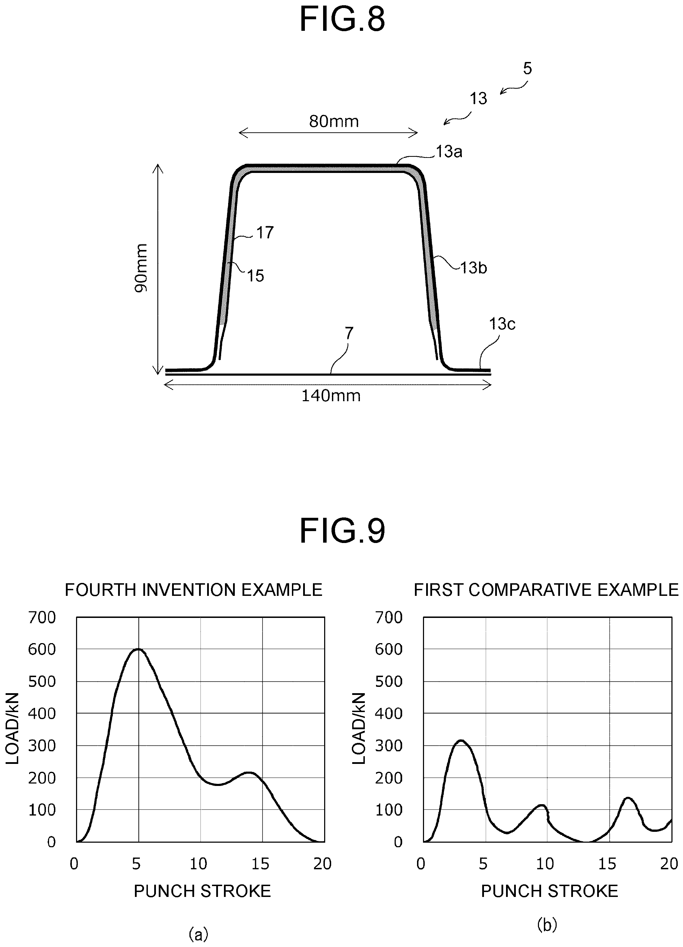

Details of the invention examples and a comparative example as test bodies (tensile strength and sheet thicknesses of the hat-shaped section part 13, the flat plate, and the reinforcement 17, a resin thickness, a resin/reinforcement patched position, a joining method of the reinforcement 17, an adhesive strength of the resin 15, and weight of each test body) and the results of the above tests are illustrated in Table 2. As an example of the load-stroke curve obtained in the crash test, load-stroke curves of the first comparative example and a fourth invention example are illustrated in FIG. 9.

Table 2

| | Hat-shaped section part | | Flat | plate | Resin | Reinforcement | | Resin/ reinforcement patched position in longitudinal direction of component | Resin/ reinforcement patched position in cross-sectional direction | Joining method of reinforcement | Adhesive strength Mpa | Weight /kg | Crash yield strength /kN | Vibration damping Accelerance (200 Hz) m/s$^2$/N |
| --- | --- | --- | --- | --- | --- | --- | --- | --- | --- | --- | --- | --- | --- | --- |
| | Strength /Mpa | Sheet thickness /mm | Strength /Mpa | Sheet thickness /mm | Thickness /mm | Strength /Mpa | Sheet thickness /mm | | | | | | | |
| First invention example | 1180 | 1.0 | 440 | 0.7 | 2.0 | 270 | 0.4 | Full length | Whole circumference | FIG. 1(b) | 10 | 3.23 | 370 | 1 |
| Second invention example | 1470 | 1.2 | 440 | 0.7 | 0.2 | 270 | 0.4 | Full length | Whole circumference | FIG. 1(b) | 12 | 3.19 | 320 | 2 |
| Third invention example | 1470 | 1.0 | 440 | 0.7 | 2.0 | 270 | 0.2 | Full length | Whole circumference | FIG. 1(b) | 5 | 2.97 | 310 | 1 |
| Fourth invention example | 980 | 1.2 | 440 | 0.7 | 5.0 | 270 | 0.6 | Full length | Whole circumference | FIG. 1(b) | 10 | 4.43 | 600 | 1 |
| Fifth invention example | 1180 | 1.0 | 440 | 0.7 | 2.0 | 270 | 0.4 | Full length | Whole circumference | FIG. 7(a) | 10 | 3.31 | 380 | 1 |
| Sixth invention example | 1180 | 1.0 | 440 | 0.7 | 2.0 | 270 | 0.4 | Full length | Whole circumference | FIG. 7(b) | 10 | 3.32 | 380 | 1 |
| Seventh invention example | 1180 | 1.0 | 440 | 0.7 | 2.0 | 270 | 0.4 | Full length | Side wall | FIG. 6 | 10 | 3.02 | 364 | 2 |
| First comparative example | 1180 | 1.6 | 440 | 0.7 | - | - | - | - | - | - | - | 3.32 | 310 | 200 |

In Table 2, a "whole circumference" described in a "resin/reinforcement patched position in a cross-sectional direction" indicates that the resin 15 and the reinforcement 17 are provided on the top portion 13a and the side wall portions 13b of the hat-shaped section part 13 as illustrated in FIG. 8. In addition, "plane stiffness" in Table 2 was calculated on the basis of an equation expressed in the above-described expression (1). Furthermore, "vibration-damping properties" indicating the vibration characteristics are values of accelerance at a frequency of 200 Hz obtained by the impact vibration test.

A structure made only of a steel sheet is employed in the first comparative example, a battery case cross member 5 is made of a material having 1180 MPa and a sheet thickness of 1.6 mm, and a flat plate (member corresponding to a bottom portion 7 of a battery case lower 11) is made of a material having 440 MPa and a sheet thickness of 0.7 mm. In the first comparative example, weight was 3.32 kg, and accelerance at 200 Hz which accelerance was obtained in the impact test was 200 m/s$^2$/N. In addition, crash yield strength indicating crash performance corresponds to the maximum load of the load-stroke curve (see FIG. 9) obtained by the crash test, and was 310 kN in the first comparative example.

In the first invention example, a material having 1180 MPa and a sheet thickness of 1.0 mm is used for a battery case cross member 5, a material having 440 MPa and a sheet thickness of 0.7 mm is used for a flat plate (member corresponding to a bottom portion 7 of a battery case lower 11), a resin thickness is 2 mm, and a material having 270 MPa and a sheet thickness of 0.4 mm is used for a reinforcement 17. A method of joining the reinforcement 17 is illustrated in FIG. 1(b). In this case, weight was 3.23 kg, crash yield strength was 370 kN, and accelerance at 200 Hz in the impact test was 1 m/s$^2$/N. While the weight was reduced by 0.09 kg as compared with the first comparative example, the crash yield strength was improved by 60 kN, and a vibration (accelerance) could be greatly controlled.

In the second invention example, a battery case cross member 5 is made of a material having 1470 MPa and a sheet thickness of 1.2 mm, and a flat plate (member corresponding to a bottom portion 7 of a battery case lower 11) is made of a material having 440 MPa and a sheet thickness of 0.7 mm. A resin thickness is 0.2 mm, and a material having 270 MPa and a sheet thickness of 0.4 mm is used for a reinforcement 17. A method of joining the reinforcement 17 is illustrated in FIG. 1(b). In this case, weight was 3.19 kg, crash yield strength was 320 kN, and accelerance at 200 Hz in the impact test was 2 m/s$^2$/N. Even when the resin thickness is thin, the crash yield strength was improved by 10 kN and the vibration (accelerance) was greatly decreased while the weight was reduced by 0.13 kg as compared with the first comparative example.

In the third invention example, a battery case cross member 5 is made of a material having 1470 MPa and a sheet thickness of 1.0 mm, and a flat plate (member corresponding to a bottom portion 7 of a battery case lower 11) is made of a material having 440 MPa and a sheet thickness of 0.7 mm. A resin thickness is 2 mm, and a material having 270 MPa and a sheet thickness of 0.2 mm is used for a reinforcement 17. A method of joining the reinforcement 17 is illustrated in FIG. 1(b). In this case, the weight was 2.97 kg, the crash yield strength was 310 kN, and the accelerance at 200 Hz in the impact test was 1 m/s$^2$/N. The structure is the lightest in the invention examples, and the crash yield strength was equivalent and the vibration-damping properties was significantly improved while the weight was reduced for 0.35 kg as compared with the first comparative example.

In the fourth invention example, a battery case cross member 5 is made of a material having 980 MPa and a sheet thickness of 1.2 mm, and a flat plate (member corresponding to a bottom portion 7 of a battery case lower 11) is made of a material having 440 MPa and a sheet thickness of 0.7 mm. A resin thickness is 5 mm, and a material having 270 MPa and a sheet thickness of 0.6 mm is used for a reinforcement 17. A method of joining the reinforcement 17 is illustrated in FIG. 1(b). In this case, weight was 4.43 kg and was increased as compared with the first comparative example. However, crash yield strength was 600 kN and was almost twice as high as that in the first comparative example. Accelerance at 200 Hz in the impact test was 1 m/s$^2$/N, and a vibration could be greatly controlled.

In the fifth invention example, a method of joining a reinforcement 17 is in a manner illustrated in FIG. 7(a), and other conditions are the same as those in the first invention example. In the joining method illustrated in FIG. 7(a), an end portion of the reinforcement 17 is joined to a flat plate (member corresponding to a bottom portion 7 of a battery case lower 11). In this case, weight is 3.31 kg and is increased as compared with the first invention example but is decreased as compared with the first comparative example. In addition, crash yield strength was 380 kN and was improved as compared with the first invention example.

In the sixth invention example, a method of joining the reinforcement 17 is in a manner illustrated in FIG. 7(b), and other conditions are the same as those in the first invention example. The joining method illustrated in FIG. 7(b) is the same as that in FIG. 1(b) in a point that the lower end portion of the reinforcement 17 is joined to the lower end portion of the side wall. However, instead of directly joining a lower end of the reinforcement 17 to a side wall portion 13b as illustrated in FIG. 1(b), joining protrusions 23 are provided at predetermined intervals in a longitudinal direction at a lower end portion of the reinforcement 17, and the joining protrusions 23 are joined to a peripheral wall of a side wall portion 13b of a hat-shaped section part 13. Thus, a resin 15 can be patched to the lower end of the reinforcement 17, and a patched amount of the resin 15 can be increased. In this case, weight was 3.32 kg, was increased as compared with the first invention example, and was the same as that of the first comparative example. However, crash yield strength was 380 kN and was improved as compared with the first invention example. As illustrated in FIG. 6, in the seventh invention example, a resin 15 and a reinforcement 17 are provided only on a side wall portion 13b of the hat-shaped section part 11, and the other conditions are the same as those of the first invention example. In this case, weight was 3.02 kg, crash yield strength was 364 kN, and accelerance at 200 Hz in the impact test was 2 m/s$^2$/N. While the weight was reduced by 0.21 kg as compared with the first invention example and by 0.30 kg as compared with the first comparative example, the crash yield strength and the vibration (accelerance) were at a level equivalent to those of the first invention example, the crash yield strength was improved by 54 kN as compared with the first comparative example, and the vibration-damping properties were also significantly improved.

As described above, it was indicated that the first to third and fifth invention examples can reduce the weight while securing the plane stiffness, the crash yield strength, and the vibration-damping properties equivalent to or higher than those of the first comparative example. In addition, in the fourth invention example, although the weight is increased as compared with the first comparative example, the crash yield strength is almost doubled and the effect of improving the crash performance is high as compared with the increase in the weight. Thus, it is effective in a case where higher crash performance is required. The same applies to the sixth invention example in which the weight is the same as that of the first comparative example and the crash yield strength is high.

Industrial Applicability

According to the present invention, it is possible to provide a battery case and a battery case cross member capable of realizing stiffness, weight reduction, and vibration-damping properties better than those of a related art without reducing the volume of the battery case.

Reference Signs List

1　　BATTERY CASE
3　　MAIN BODY
5　　BATTERY CASE CROSS MEMBER
7　　BOTTOM PORTION
9　　SIDE WALL
11　　BATTERY CASE LOWER
13　　HAT-SHAPED SECTION PART
13a　　TOP PORTION
13b　　SIDE WALL PORTION
13c　　FLANGE PORTION
15　　RESIN
17　　REINFORCEMENT
19　　BATTERY CASE CROSS MEMBER (CONVENTIONAL EXAMPLE)
21　　POLE
23　　JOINING PROTRUSION

**Claims**

1. A battery case for being mounted under a floor of a vehicle body and storing a battery, comprising:

    a main body formed of a bottomed frame body having side walls facing each other in a vehicle width direction in a state of being mounted on the vehicle body; and
    a battery case cross member configured to extend between the facing side walls in the main body and to reinforce the main body, the battery case cross member including

    a hat-shaped section part including a top portion, side wall portions, and flange portions, the flange portions abutting on a bottom surface of the main body,
    a resin patched on or coating a full length of an inner surface and/or outer surface of the hat-shaped section part, and
    a reinforcement arranged to cover the resin and adhered to the resin.

2. A battery case for being mounted under a floor of a vehicle body and storing a battery, comprising:

   a main body formed of a bottomed frame body having side walls facing each other in a vehicle width direction in a state of being mounted on the vehicle body; and
   a battery case cross member configured to extend between the facing side walls in the main body and reinforce the main body, the battery case cross member including
   a tunnel-shaped part having a tunnel shape as a whole and including a flange portion at a lower end portion of each of side walls,
   a resin patched on or coating a full length of an inner surface and/or outer surface of the tunnel-shaped part, and
   a reinforcement arranged to cover the resin and adhered to the resin.

3. The battery case according to claim 1 or 2, wherein

   a thickness of the resin is 0.1 to 5 mm, and
   a thickness of the reinforcement is 0.15 to 1 mm.

4. The battery case according to any one of claims 1 to 3, wherein an end portion of the reinforcement is joined to each of the side wall portions of the hat-shaped section part or the peripheral wall of the tunnel-shaped part.

5. The battery case according to claim 4, wherein

   joining protrusions are formed at the end portion of the reinforcement at predetermined intervals in a longitudinal direction, and
   the joining protrusions are joined to each of the side wall portions of the hat-shaped section part or the peripheral wall of the tunnel-shaped part.

6. The battery case according to any one of claims 1 to 3, wherein an end portion of the reinforcement is joined to the bottom surface of the main body.

7. A battery case cross member for being provided in a main body of a battery case to extend between facing side walls of the main body and reinforcing the main body, the main body being formed of a bottomed frame body having the facing side walls, and the battery case being configured to store a battery in the main body, the battery case cross member comprising:

   a hat-shaped section part including a top portion, side wall portions, and flange portions, the flange portions abutting on a bottom surface of the main body in a state of being installed in the battery case;
   a resin patched on or coating a full length of an inner surface and/or outer surface of the hat-shaped section part; and
   a reinforcement arranged to cover the resin and adhered to the resin.

8. A battery case cross member for being provided in a main body of a battery case to extend between facing side walls of the main body and reinforcing the main body, the main body being formed of a bottomed frame body having the facing side walls, and the battery case being configured to store a battery in the main body, the battery case cross member comprising:

   a tunnel-shaped part including an opening in a part of a peripheral wall, and a flange portion in the opening;
   a resin patched on or coating a full length of an inner surface and/or outer surface of the tunnel-shaped part; and
   a reinforcement arranged to cover the resin and adhered to the resin.

9. The battery case cross member according to claim 7 or 8, wherein

   a thickness of the resin is 0.1 to 5 mm, and
   a thickness of the reinforcement is 0.15 to 1 mm.

10. The battery case cross member according to any one of claims 7 to 9, wherein an end portion of the reinforcement is joined to each of the side wall portions of the hat-shaped section part or the peripheral wall of the tunnel-shaped part.

11. The battery case cross member according to claim 10, wherein

joining protrusions are formed at the end portion of the reinforcement at predetermined intervals in a longitudinal direction, and
the joining protrusions are joined to each of the side wall portions of the hat-shaped section part or the peripheral wall of the tunnel-shaped part.

12. The battery case cross member according to any one of claims 7 to 9, wherein an end portion of the reinforcement is joined to the bottom surface of the main body.

# FIG.1

(a)

(b)

# FIG.2

# FIG.3

| MODEL | CONVENTIONAL MODEL | INVENTION MODEL |
|---|---|---|
| STRUC-TURE | | |

# FIG.4

# FIG.5

(a)

(b)

(c)

# FIG.6

# FIG.7

(a)                              (b)

# FIG.8

# FIG.9

FOURTH INVENTION EXAMPLE

FIRST COMPARATIVE EXAMPLE

(a)

(b)

## INTERNATIONAL SEARCH REPORT

| International application No. |
| --- |
| **PCT/JP2022/030954** |

**A.    CLASSIFICATION OF SUBJECT MATTER**

*H01M 50/249*(2021.01)i; *B60K 1/04*(2019.01)i; *H01M 50/242*(2021.01)i; *H01M 50/291*(2021.01)i; *H01M 50/293*(2021.01)i
FI:    H01M50/249; B60K1/04 Z; H01M50/242; H01M50/293; H01M50/291

According to International Patent Classification (IPC) or to both national classification and IPC

**B.    FIELDS SEARCHED**

Minimum documentation searched (classification system followed by classification symbols)

H01M50/249; B60K1/04; H01M50/242; H01M50/291; H01M50/293

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2019-192329 A (HONDA MOTOR CO., LTD.) 31 October 2019 (2019-10-31) claim 1, paragraph [0028] | 1-4, 7-10 |
| A | | 5-6, 11-12 |
| Y | JP 2020-100183 A (JFE STEEL CORP.) 02 July 2020 (2020-07-02) claims 1-2, paragraphs [0013], [0054], [0082], fig. 7 | 1-4, 7-10 |
| A | | 5-6, 11-12 |
| A | JP 2018-144529 A (JFE STEEL CORP.) 20 September 2018 (2018-09-20) | 1-12 |

☐ Further documents are listed in the continuation of Box C.     ☑ See patent family annex.

| | |
| --- | --- |
| \*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **13 September 2022** | **04 October 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/030954**

| Patent document cited in search report | | | Publication date (day/month/year) | Patent family member(s) | | | Publication date (day/month/year) |
|---|---|---|---|---|---|---|---|
| JP | 2019-192329 | A | 31 October 2019 | US 2019/0326573 A1 claim 1, paragraph [0033] EP 3557653 A1 CN 110395098 A | | | |
| JP | 2020-100183 | A | 02 July 2020 | US 2022/0081033 A1 claims 1-2, paragraphs [0016], [0086], table 2, fig. 7 WO 2020/129327 A1 EP 3901007 A1 CN 113226893 A KR 10-2021-0091245 A | | | |
| JP | 2018-144529 | A | 20 September 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019081436 A
- JP 2021068523 A